# EUROPEAN PATENT SPECIFICATION

(11) **EP 2 237 453 B1**
(45) Date of publication and mention of the grant of the patent: **28.09.2011**
(21) Application number: 09290253.5
(22) Date of filing: 03.04.2009
(51) Int. Cl.: H04B 10/08, H04J 14/02

(54) **Method and equipment for managing optical channel monitoring in an optical network**
Verfahren und Ausrüstung zur Verwaltung der Überwachung eines optischen Kanals in einem optischen Netz
Procédé et équipement de gestion de la surveillance d'un canal optique dans un réseau optique

(43) Date of publication of application: 06.10.2010
(73) Proprietor: Alcatel Lucent, 75008 Paris (FR)
(72) Inventor: Zami, Thierry, 91300 Massy (FR); Morea, Annalisa, 91400 Orsay (FR)
(74) Representative: Croonenbroek, Thomas Jakob

(56) References cited:
- WO-A-02/100006
- US-A1- 2008 253 762

## Description

### BACKGROUND OF THE INVENTION

The present invention relates to the field of optical networks and more specifically to optical channel monitoring.

During the past decade, great improvements have been achieved in the optical network area, notably with the development of transparent networks and Wavelength Division Multiplexing (WDM) technology that have enabled a rapid growth of data traffic. In addition to this data rate enhancement, network operators are also looking for quality improvement in the signal transmission in order to ensure a given signal quality at destination.

To cope with possible technical issues and to detect rapidly network failures, Optical Performance Monitoring (OPM) has been developed. Also called Optical Channel Monitoring (OCM), said monitoring refers to an assessment of the data channel quality by measuring its optical characteristics without directly looking at the transmitted sequence of bits. OPM is typically used in amplifier gain balancing, routing decision (correct switching in reconfigurable optical add-drop multiplexers for example) or active physical impairment compensation and regeneration of the optical signal. Document US, 2008/0253762 refers, to a method and system for performance monitor for digital optical DWDM networks using OPMs.

Nevertheless, to maximize the measurement accuracy, the monitoring device should test one channel at once. Therefore, the trend is to limit the number of said monitoring devices to reduce the overall cost of the network by sharing these monitoring equipments between several channels along the time.

### SUMMARY OF THE INVENTION

It is therefore an object of the present invention to overcome the above cited drawbacks of the state of the art and provide a method that allows a more efficient use of the monitoring devices.

Thus, the embodiments described herein refer to a method for managing optical channel monitoring in an optical network wherein at least one optical channel monitoring device is located in an optical network node and scans alternatively a plurality of channels, said method comprising the following steps:
- determining at least one quality feature of the signals of said plurality of channels,
- generating a schedule of the at least one optical channel monitoring device attached to said plurality of channels in function of the at least one determined quality feature of the signals of said plurality of channels wherein the scanning time and/or frequency of the channels having the lowest quality are/is higher than the scanning time and/or frequency of the channels having the highest quality.

According to another embodiment, said method comprises an additional step of achieving optical channel monitoring according to the defined schedule.

According to an additional embodiment, the steps of said method are repeated after a predetermined amount of time.

According to a supplementary embodiment, said predetermined amount of time may vary in function of at least one measured quality feature.

According to another embodiment, said predetermined amount of time is determined by the control plane.

According to an additional embodiment, the at least one quality feature of the signals is determined at the egress node of said signal and is transmitted to the network node corresponding to the at least one optical channel monitoring device.

According to a supplementary embodiment, the quality feature comprises a Bite Error Rate (BER) of the signal.

According to another embodiment, said Bite Error Rate (BER) is determined by the Forward Error Correction (FEC) decoding device.

According to an additional embodiment, the at least one quality feature determination comprises a determination of the quality stability of the signal.

According to a supplementary embodiment, the detection of a quality feature level below a predefined threshold launches a restoration process or an impairment compensating process.

The present embodiments also refer to an equipment for monitoring optical channels in an optical network wherein said equipment is located in an optical network node and scans alternatively a plurality of channels, said equipment comprising processing means being adapted to perform:
- receiving at least one quality feature of the signals of said plurality of channels,
- defining the schedule of the optical channel monitoring device attached to said plurality of channels in function of the at least one determined quality feature of the signals of said plurality of channels in order to focus the monitoring on the channels having the lowest signal qualities,

According to another embodiment, said equipment comprises monitoring means being adapted to perform:
- achieving optical channel monitoring according to the defined schedule.

According to an additional embodiment, said equipment comprises monitoring means being adapted to perform at least one of the following steps:
- measuring channel signal wavelength,
- measuring channel signal power,
- measuring channel optical signal to noise ratio (OSNR),
- measuring channel chromatic residual dispersion,
- measuring channel polarization mode dispersion.

### BRIEF DESCRIPTION OF THE DRAWINGS

FIG.1 is a synoptic diagram representing the different steps of an embodiment of the present invention;
FIG.2 is a chart representing an example OCM device schedule during the configuration of said schedule;
FIG.3 is a chart representing an example OCM device schedule according to an embodiment of the present invention.

### DETAILED DESCRIPTION OF THE INVENTION

As used herein, the term "OSNR" refers to the acronym optical signal to noise ratio;
As used herein, the term "BER" refers to the acronym bite error rate;
As used herein, the term "FEC" refers to the acronym forward error correction;
As used herein, the term "OCM" refers to the optical channel monitoring;
As used herein, the term "OPM" refers to the acronym optical performance monitoring;
As used herein, the term "stability of the signal" refers to the quality variation of the signal along the time;
As used herein, the term "quality margin" refers the difference between a measurement quality feature and a predetermined threshold corresponding to said quality feature.

The present invention may be embodied in other specific apparatus and/or methods. The described embodiments are to be considered in all respects as only illustrative and not restrictive. In particular, the scope of the is indicated by the appended claims rather than by the description and figures herein.

An embodiment of the present invention refers to the generation and the updating of a schedule to allow a dynamic optical channel monitoring (OCM) management focusing on the channels having the lowest signal qualities.

Optical channel monitoring is achieved by monitoring devices located in the nodes of the optical network. The goal of said monitoring is to control some of the signal features without having to convert them from the optical domain to the electronic domain. In order to optimize such monitoring, the organization of said monitoring is achieved in function of the quality margin of each channel. Thus, the monitoring device will spend more time to control channels having the lowest quality margins.

It has to noted that the monitoring devices considered herein may be of any kind and may comprises monitoring means adapted to perform at least one of the following signal feature:
- channel wavelength,
- channel power,
- channel OSNR,
- channel residual chromatic dispersion,
- channel polarization mode dispersion, or any relevant channel signal features.

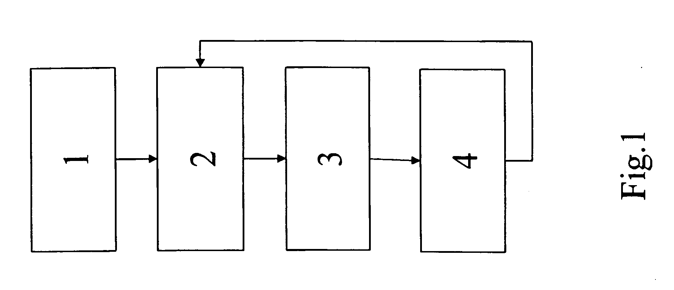

The different steps of a possible embodiment of the present invention are represented in Fig.1. A first step may correspond to the schedule configuration. This step occurs only at the initialization of the monitoring device or in case of a reset of the schedule, for example, after a failure in the network.

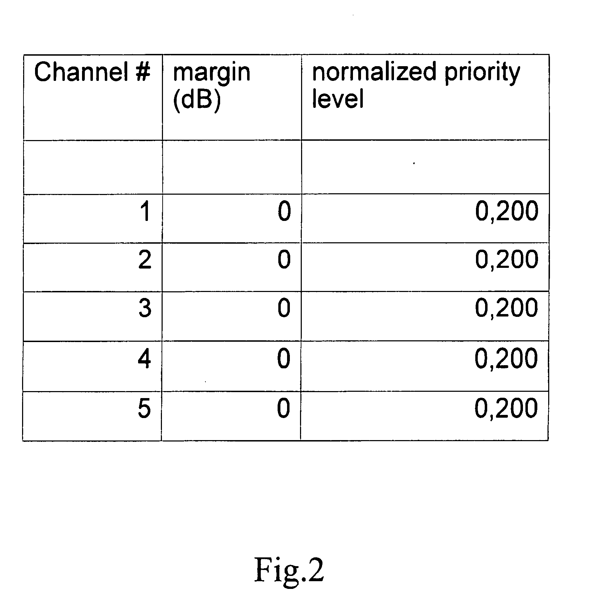

Fig.2 is a chart representing the schedule management in the case of a monitoring device in charge of five different channels. In reality, the number of channels monitored by such device may be as high as the device capacity (said capacity may be defined by the network operator) and may change at any time in function of the network traffic. Moreover, several monitoring devices may be located in the same node such that the different channels are distributed among the different monitoring device in order to optimize the monitoring efficiency. The second column of the chart represents the quality margin which corresponds to the quality features of the channels. Nevertheless, during the configuration step, the quality margins are not yet available and are therefore set to zero. The third column represents the normalized priority levels which are deduced from the quality margins such that the channels having the lowest quality margins get the highest priority levels. The normalized priority level may correspond to the time proportion that the monitoring device will spend on a channel.

During the configuration, the margins are all the same so that the monitoring device will spend the same amount of time on each channel (1/5 of the total time required to scan the five channels). Said schedule is managed by a node controller. In each node, a node controller manages the schedules of all the monitoring devices located in the corresponding node.

The second step corresponds to the reception of quality feature measurements. Said quality feature may be any factor corresponding to a signal quality, for example a bite error rate (BER). Said quality feature may be determined at the egress node or end receiver of the corresponding signal, for example at the forward error correction decoding device of said end receiver. Such determination allows to detect an instantaneous BER and allows therefore a dynamic adaptation of the schedule. Said quality feature is then transmitted to the nodes along the transmission path of the signal. Said transmission is controlled by the control plane and the received measurements are processed by the node controllers.

Nevertheless, quality detection at the egress node requires an efficient transmission of said quality feature measurements through the network by the control plane. If sufficient transmission efficiency is not available, the quality margin may be determined locally with a quality of transmission (QoT) estimator based on the knowledge of the light-path followed by the signal under test across the network.

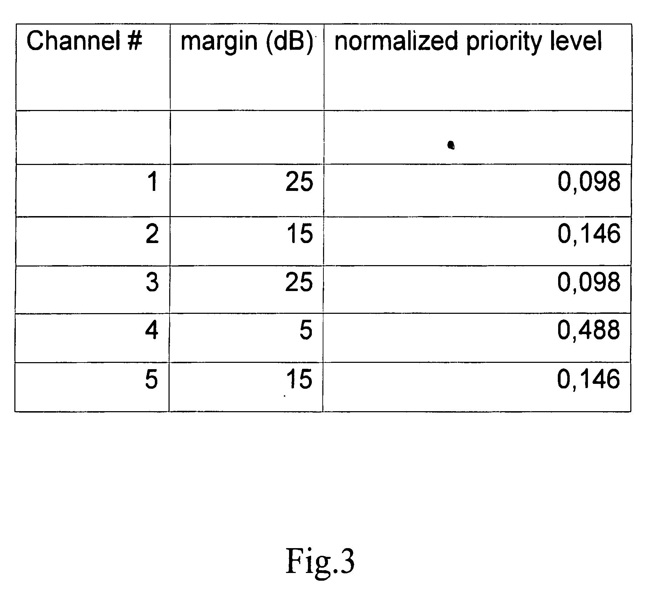

The third step refers to the update of the schedule. Indeed, based on the received quality features provided by the different egress nodes corresponding to the different channels, a power margin is affected by the node controller to each channel of the corresponding monitoring device as described in Fig.3. Thus, the priority levels are deduced from said quality feature measurements such that the signals having the lowest quality features get the highest priority levels and therefore the highest monitoring time. When a channel has a higher priority level, the monitoring device may either scan said channel during a longer time and/or scan said channel with a higher frequency.

In the present example, the channel number 4 has the lowest quality margin so that its priority level (0,488) is higher than the other channels. Consequently, the monitoring will spend almost half of the time (48,8% of the time) to scan the channel number 4 in order to detect a potential signal quality failure. In fact, the priority level is a weighting coefficient influencing the monitoring time spent by the monitoring device on the corresponding channel. It has also to be noted that the relation between the quality margin and the priority level coefficient is not necessarily linear such that a channel having a quality margin twice smaller than another one will not necessarily be monitored twice as much as the other one.

Besides, the quality feature may also take into account the stability of the signal such that a signal having a quality feature with high variations along the time will get a higher priority level than a signal having stable quality feature measurements.

Moreover, the monitoring schedule may be updated either each time a quality feature measurement is received or after a predetermined amount time or may be decided by the control plane of the network.

In addition, a quality threshold is generally defined in order to trigger a correction action. Indeed, said quality threshold corresponds to the threshold below which the signal quality at destination will not match the receiver/customer requirements. Thus, when said threshold is reached, a restoration process or a compensation process may be launched. For example, the optical power of the corresponding channel may be enhanced, a regeneration of the signal may be decided or a routing modification may be achieved.

OPM is also used for connection failure detection so that a signal retransmission request can be sent to the ingress node if needed. As a consequence, with an identical number of monitoring devices, the embodiment of the method described herein provides a faster failure detection and therefore a better reactivity of the network.

The fourth step corresponds to the optical monitoring according to the schedule. The monitoring device will scan its attached channels and will spend on a channel a monitoring time proportional to the priority level of said channel. The channels featuring a small quality margin at reception will be monitored in priority so that the monitoring time is proportional to the risk of connection failure.

Thus, the embodiments described herein allow to improve the optical performance monitoring in the transparent networks by generating a monitoring schedule taking into account the individual channel quality features and focusing the monitoring on the channels having the lowest quality features therefore optimizing the use of the monitoring devices leading to an overall enhanced performance of the network. Indeed, the embodiments described herein allow either to reduce the overall cost of the network by reducing the number of monitoring devices while keeping the same failure detection efficiency or to improve the reactivity of the network for an equivalent number of monitoring devices.

## Claims

1. Method for managing optical channel monitoring in an optical network wherein at least one optical channel monitoring device is located in an optical network node and scans alternatively a plurality of channels **characterized in that** said method comprising the following steps:
- determining at least one quality feature of the signals of said plurality of channels,
- generating a schedule of the at least one optical channel monitoring device attached to said plurality of channels in function of the at least one determined quality feature of the signals of said plurality of channels wherein the scanning time and/or frequency of the channels having the lowest quality are/is higher than the scanning time and/or frequency of the channels having the highest quality.

2. Method for managing optical channel monitoring according to claim 1 wherein it comprises an additional step of achieving optical channel monitoring according to the defined schedule.

3. Method for managing optical channel monitoring according to claim 1 or 2 wherein the steps of said method are repeated after a predetermined amount of time.

4. Method for managing optical channel monitoring according to claim 3 wherein said predetermined amount of time may vary in function of at least one measured quality feature.

5. Method for managing optical channel monitoring according to one of the claims from 1 to 3 wherein said predetermined amount of time is determined by the control plane.

6. Method for managing optical channel monitoring according to one of the previous claims wherein the at least one quality feature of the signals is determined at the egress node of said signal and is transmitted to the network node corresponding to the at least one optical channel monitoring device.

7. Method for managing optical channel monitoring according to one of the previous claims wherein the quality feature comprises a Bite Error Rate (BER) of the signal.

8. Method for managing optical channel monitoring in accordance with claim 7 wherein said Bite Error Rate (BER) is determined by the Forward Error Correction (FEC) decoding device.

9. Method for managing optical channel monitoring in accordance with one of the previous claims wherein the at least one quality feature determination comprises a determination of the quality stability of the signal.

10. Method for managing optical channel monitoring in accordance with one of the previous claims wherein the detection of a quality feature level below a predefined threshold launches a restoration process or an impairment compensating process.

11. Equipment for monitoring optical channels in an optical network wherein said equipment is located in an optical network node and scans alternatively a plurality of channels **characterized in that** said equipment comprising processing means being adapted to perform:
- receiving at least one quality feature of the signals of said plurality of channels,
- defining the schedule of the optical channel monitoring device attached to said plurality of channels in function of the at least one determined quality feature of the signals of said plurality of channels so that the scanning time and/or frequency of the channels having the lowest quality are/is higher than the scanning time and/or frequency of the channels having the highest quality.

12. Equipment for monitoring optical channels in accordance with claim 11 wherein said equipment comprises monitoring means being adapted to perform:
- achieving optical channel monitoring according to the defined schedule.

13. Equipment for monitoring optical channels in accordance with claim 11 or 12 wherein said equipment comprises monitoring means being adapted to perform at least one of the following steps:
- measuring channel signal wavelength,
- measuring channel signal power,
- measuring channel optical signal to noise ratio (OSNR),
- measuring channel chromatic residual dispersion,
- measuring channel polarization mode dispersion.

## Patentansprüche

1. Verfahren zur Verwaltung der optischen Kanalüberwachung in einem optischen Netzwerk, wobei mindestens eine optische Kanalüberwachungsvorrichtung in einem optischen Netzwerkknoten angeordnet ist und alternativ eine Mehrzahl von Kanälen abtastet, **dadurch gekennzeichnet, dass** das besagte Verfahren die folgenden Schritte umfasst:
- Ermitteln mindestens eines Qualitätsmerkmals von Signalen der besagten Mehrzahl von Kanälen,
- Erzeugen eines Zeitplans der mindestens einen mit der besagten Mehrzahl von Kanälen verbundenen optischen Kanalüberwachungsvorrichtung gemäß mindestens einem ermittelten Qualitätsmerkmal der Signale der besagten Mehrzahl von Kanälen, wobei die Abtastzeit und/oder -frequenz der Kanäle mit der niedrigsten Qualität die Abtastzeit und/oder -frequenz der Kanäle mit der höchsten Qualität überschreiten/überschreitet.

2. Verfahren zur Verwaltung der optischen Kanalüberwachung nach Anspruch 1, umfassend einen zusätzlichen Schritt des Durchführens der optischen Kanalüberwachung gemäß dem definierten Zeitplan.

3. Verfahren zur Verwaltung der optischen Kanalüberwachung nach Anspruch 1 oder 2, wobei die Schritte des besagten Verfahrens nach einer vorbestimmten Zeitspanne wiederholt werden.

4. Verfahren zur Verwaltung der optischen Kanalüberwachung nach Anspruch 3, wobei die besagte vorbestimmte Zeitspanne gemäß mindestens einem gemessenen Qualitätsmerkmal variieren kann.

5. Verfahren zur Verwaltung der optischen Kanalüberwachung nach einem der Ansprüche 1 bis 3, wobei die besagte vorbestimmte Zeitspanne durch die Steuerebene bestimmt wird.

6. Verfahren zur Verwaltung der optischen Kanalüberwachung nach einem der vorstehenden Ansprüche, wobei das mindestens eine Qualitätsmerkmal der Signale am Ausgangsknoten des besagten Signals ermittelt und an den der mindestens einen optischen Kanalüberwachungsvorrichtung entsprechenden Netzwerkknoten übertragen wird.

7. Verfahren zur Verwaltung der optischen Kanalüberwachung nach einem der vorstehenden Ansprüche, wobei das Qualitätsmerkmal eine Bitfehlerrate (BER) des Signals umfasst.

8. Verfahren zur Verwaltung der optischen Kanalüberwachung nach Anspruch 7, wobei die besagte Bitfehlerrate (BER) durch die Vorwärtsfehlerkorrektur-, (FEC)-Decodiervorrichtung bestimmt wird.

9. Verfahren zur Verwaltung der optischen Kanalüberwachung nach einem der vorstehenden Ansprüche, wobei die besagte mindestens eine Qualitätsmerkmalermittlung eine Ermittlung der Qualitätsstabilität des Signals umfasst.

10. Verfahren zur Verwaltung der optischen Kanalüberwachung nach einem der vorstehenden Ansprüche, wobei das Erkennen eines Qualitätsmerkmalpegels, welcher einen vorbestimmten Grenzwert unterschreitet, einen Wiederherstellungsprozess oder einen Beeinträchtigungskompensierungsprozess auslöst.

11. Einrichtung zur Überwachung von optischen Kanälen in einem optischen Netzwerk, wobei die besagte Einrichtung in einem optischen Netzwerkknoten angeordnet ist und alternativ eine Mehrzahl von Kanälen abtastet, **dadurch gekennzeichnet, dass** die besagte Einrichtung Verarbeitungsmittel umfasst, welche für das Durchführen der folgenden Schritte ausgelegt sind:
- Empfangen mindestens eines Qualitätsmerkmals der Signale der besagten Mehrzahl von Kanälen,
- Definieren des Zeitplans der mit der besagten Mehrzahl von Kanälen verbundenen optischen Kanalüberwachungsvorrichtung gemäß dem mindestens einen ermittelten Qualitätsmerkmal der Signale der besagten Mehrzahl von Kanälen, so dass die Abtastzeit und/oder -frequenz der Kanäle mit der niedrigsten Qualität die Abtastzeit und/oder -frequenz der Kanäle mit der höchsten Qualität überschreiten/überschreitet.

12. Einrichtung zur Überwachung von optischen Kanälen gemäß Anspruch 11, wobei die besagte Einrichtung Überwachungsmittel umfasst, welche ausgelegt sind für das Durchführen
- der optischen Kanalüberwachung gemäß dem definierten Zeitplan.

13. Einrichtung zur Überwachung von optischen Kanälen gemäß Anspruch 11 oder 12, wobei die besagte Einrichtung Überwachungsmittel umfasst, welche für das Durchführen mindestens eines der folgenden Schritte ausgelegt sind:
- Messen der Wellenlänge des Kanalsignals,
- Messen der Stärke des Kanalsignals,
- Messen des optischen Signal-Rausch-Verhältnisses (OSNR) des Kanals,
- Messen der verbleibenden chromatischen Dispersion des Kanals,
- Messen der Polarisationsmodendispersion des Kanals.

## Revendications

1. Procédé de gestion de la surveillance de canaux optiques dans un réseau optique, dans lequel au moins un dispositif de surveillance de canal optique est situé dans un noeud du réseau optique et balaye alternativement une pluralité de canaux, **caractérisé en ce que** ledit procédé comprend les étapes suivantes :
- détermination d'au moins une caractéristique de qualité des signaux de ladite pluralité de canaux,
- génération d'une planification de l'au moins un dispositif de surveillance de canal optique relié à ladite pluralité de canaux en fonction de l'au moins une caractéristique de qualité déterminée des signaux de ladite pluralité de canaux, dans lequel le temps de balayage et/ou la fréquence des canaux présentant la qualité la plus faible est/sont supérieur(es) au temps de balayage et/ou à la fréquence des canaux présentant la qualité la plus haute.

2. Procédé de gestion de la surveillance de canaux optiques selon la revendication 1, dans lequel le procédé comprend une étape supplémentaire d'exécution de la surveillance de canal optique conformément à la planification définie.

3. Procédé de gestion de la surveillance de canaux optiques selon la revendication 1 ou 2, dans lequel les étapes dudit procédé sont répétées après une quantité de temps prédéterminée.

4. Procédé de gestion de la surveillance de canaux optiques selon la revendication 3, dans lequel ladite quantité de temps prédéterminée peut varier en fonction de l'au moins une caractéristique de qualité mesurée.

5. Procédé de gestion de la surveillance de canaux optiques selon l'une des revendications 1 à 3, dans lequel ladite quantité de temps prédéterminée est déterminée par le plan de commande.

6. Procédé de gestion de la surveillance de canaux optiques selon l'une des revendications précédentes, dans lequel l'au moins une caractéristique de qualité des signaux est déterminée au noeud de sortie dudit signal et est transmise au noeud de réseau correspondant à l'au moins un dispositif de surveillance de canal optique.

7. Procédé de gestion de la surveillance de canaux optiques selon l'une des revendications précédentes, dans lequel la caractéristique de qualité comprend un taux d'erreur binaire (BER) du signal.

8. Procédé de gestion de la surveillance de canaux optiques selon la revendication 7, dans lequel ledit taux d'erreur binaire (BER) est déterminé par le dispositif de décodage de correction d'erreur en cours de transmission (FEC).

9. Procédé de gestion de la surveillance de canaux optiques selon l'une des revendications précédentes, dans lequel la détermination de l'au moins une caractéristique de qualité comprend une détermination de la stabilité de la qualité du signal.

10. Procédé de gestion de la surveillance de canaux optiques selon l'une des revendications précédentes, dans lequel la détection d'un niveau de caractéristique de qualité inférieur à un seuil prédéterminé lance un processus de restauration ou un processus de compensation d'altération.

11. Équipement de surveillance de canaux optiques dans un réseau optique, dans lequel ledit équipement est situé dans un noeud du réseau optique et balaye alternativement une pluralité de canaux, **caractérisé en ce que** ledit équipement comprend des moyens de traitement adaptés pour exécuter les étapes suivantes :
- réception d'au moins une caractéristique de qualité des signaux de ladite pluralité de canaux,
- définition de la planification du dispositif de surveillance de canal optique relié à ladite pluralité de canaux en fonction de l'au moins une caractéristique de qualité déterminée des signaux de ladite pluralité de canaux, de sorte que le temps de balayage et/ou la fréquence des canaux présentant la qualité la plus faible soi(en)t supérieur(es) au temps de balayage et/ou à la fréquence des canaux présentant la qualité la plus haute.

12. Équipement de surveillance de canaux optiques selon la revendication 11, dans lequel ledit équipement comprend des moyens de surveillance adaptés pour exécuter l'étape suivante :
- réalisation de la surveillance de canal optique conformément à la planification définie.

13. Équipement de surveillance de canaux optiques selon la revendication 11 ou 12, dans lequel ledit équipement comprend des moyens de surveillance adaptés pour exécuter au moins l'une des étapes suivantes :
- mesure de la longueur d'onde du signal du canal,
- mesure de la puissance du signal du canal,
- mesure du rapport signal à bruit optique (OSNR),
- mesure de la dispersion résiduelle chromatique du canal,
- mesure de la dispersion de mode de polarisation du canal.
